# EUROPÄISCHE PATENTANMELDUNG

(11) **EP 2 457 810 A2**
(43) Veröffentlichungstag der Anmeldung: **30.05.2012**
(21) Anmeldenummer: 11468001.0
(22) Anmeldetag: 04.01.2011
(51) Int. Cl.: B62D 63/06

(54) **Klappanhänger für PKW**

(30) Priorität: 30.11.2010 SI 201000415
(71) Anmelder: Dobovicnik, Milos, 2370 Dravograd (SI)
(72) Erfinder: Dobovicnik, Milos, 2370 Dravograd (SI)

(57) **Zusammenfassung**

Der Klappanhänger für PKW erlaubt mit seinem spezifisch gefertigten Fahrwerkbau (5,9,13) das Lagern bzw. Garagieren auf einer möglichst kleinen Fläche in der Zeit, wo er nicht gebraucht wird. Das gewährt die rationellste Ausnutzung des Aufbewahrungsplatzes. Es ist auch diebstahlsicher, da keine andere Sicherung des PKW-Anhängers vor dem Diebstahl mehr erforderlich ist, wenn wir ihn auf freien Flächen z.B. offenen Parkplätzen aufbewahren müssen.

## Beschreibung

Zum Gegenstand der Erfindung wird der Klappanhänger für PKW im Gesamtgewicht bis zu 750 kg gestellt, mit oder ohne Auflaufbremse. Es handelt sich um eine Größe des PKW-Anhängers, wo der Anhänger von einer einzigen Person leicht zusammen- und auseinandergeklappt werden kann.

Das Problem, welches die Erfindung hier löst, ist der ständige Raummangel fürs Parken, Lagern oder Garagieren. Diesen Klappanhänger können wir in jeder Garage oder irgendwo anders auf einem dafür geeigneten und sicheren Platz mit dem rationellsten Raumverbrauch in zusammengeklapptem Zustand garagieren.

Dem Anmelder sind keine Lösungen der PKW-Anhänger mit Klappsystem bekannt.

Nach der Erfindung ist das Problem mit einem Anhängerbau gelöst, welcher die Faltbarkeit des Anhängers erlaubt, was dazu führt, dass wir aus dem ca. 3,5 m langen Gegenstand eine kompakte Einheit von ca. 0,8 m lang bekommen.

Die Erfindung wird auf den folgenden Photos genauer beschrieben.
Bild 1- PKW-Anhänger in Seitenansicht
Bild 2 - Mittelteil der Kastenseite
Bild 3 - PKW-Anhänger im Grundriss
Bild 4 - zusammengeklappter PKW-Anhänger
Bild 5 - Hinteransicht des PKW-Anhängers
Bild 6 - Detail der beweglichen Kastenseite in dem mittleren Teil des Laderaumes

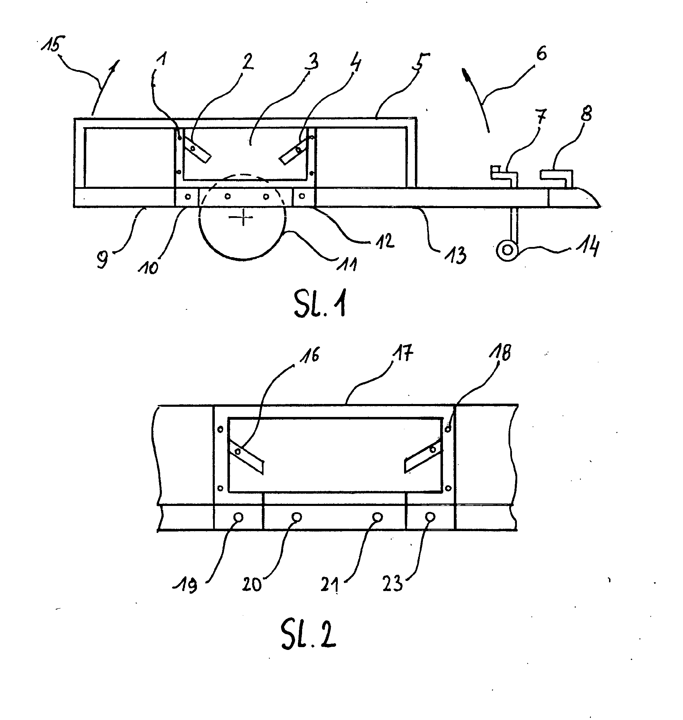

### Beschreibung von Bild 1;

Darstellung des PKW-Anhängers in Seitenansicht mit Fahrwerk 9, 13, dem Laderaumkasten 5, beweglichen Teil der Kastenseite 3, Verschlüssen 2 und 4 und Bolzen 1, welche die Verbindung mit dem übrigen Teil der Laderaumkastenseite erlauben. Die Nummer 10, 12 zeigen die Knickstelle, die Pfeilen 6 und 15 jedoch die Bewegungsrichtung des vorderen und hinteren Teils des Anhängers beim Zusammenklappen in eine kompakte Einheit. Nr. 11 zeigt das Rad, Nr. 7 und 14 das Hilfsrad und Nr. 8 die Ankoppelung des Anhängers.

### Beschreibung von Bild 2;

Das Bild 2 zeigt den beweglichen mittleren Teil der Längsseite des Anhängerkastens, welcher über Bolzen 19, 20, 21 und 23 nach links und rechts auslenkt, weg von der Linie der übrigen Konstruktion der Längsseite des Kastens. Nr. 18 schildert einen der Bolzen, welche die Steifigkeit der Verbindung des beweglichen Teils der Kastenseite mit der anderen Konstruktion erlauben. Nr. 17 zeigt den Rahmen des mittleren Teils der Kastenseite. Die Auslenkung des mittleren Teils der Kastenseite ist die dringende Bedingung für die Faltbarkeit der restlichen Konstruktion. Der mittlere Teil der Kastenseite, verbunden mit der restlichen Konstruktion sichert auch Steifigkeit der gesamten Konstruktion in der ausgestellten Form.

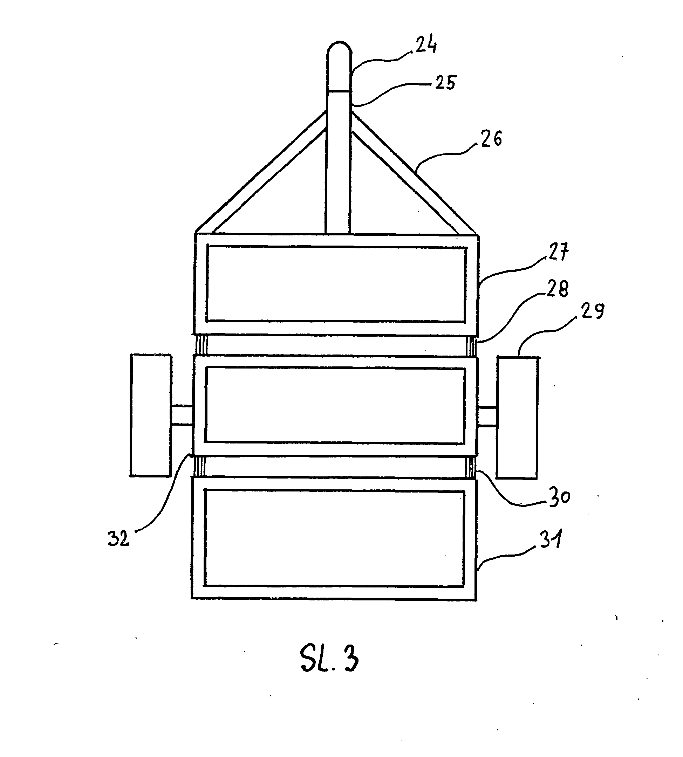

### Beschreibung von Bild 3;

Das Bild 3 zeigt die Klappkonstruktion des PKW-Anhängers im Grundriss, wo die Knickfelder bzw. Scharniere dargestellt sind, welche das Falten erlauben 28, 30. Nr. 32 zeigt den mittleren Teil des PKW-Anhängers mit Achse und Rädern 29. Das Bild 31 stellt den Hinterteil des Klappanhängers, Nr. 27 aber den Vorderteil des Klappanhängers mit Deichsel 25, Ankoppelung 24 und Befestigungen 26.

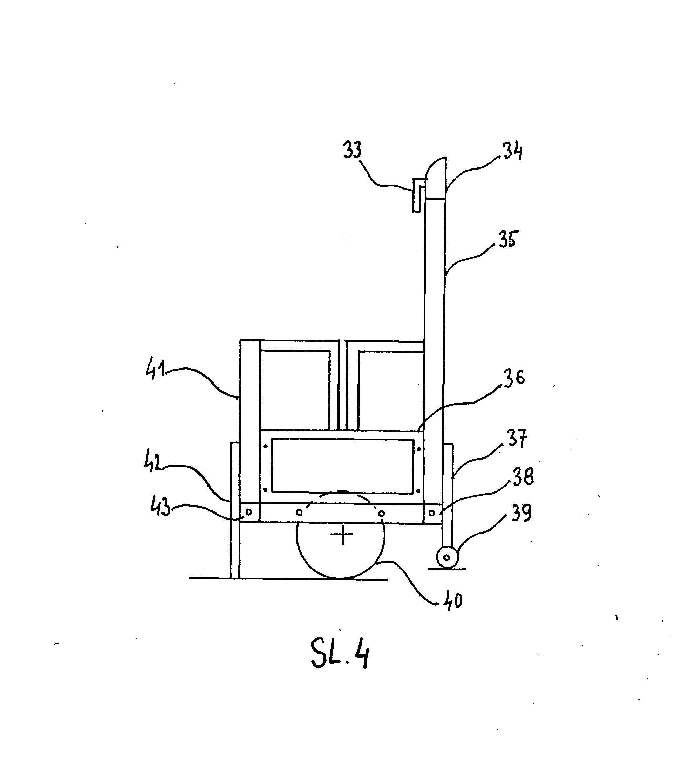

### Beschreibung von Bild 4;

Das Bild 4 zeigt von Seitenansicht den zusammengeklappten PKW-Anhänger als kompakte Einheit, wo der Vorderteil 35 auf eine Hälfte des festen mittleren Teils des PKW-Anhängers 36 gestellt ist, der Hinterteil ist aber über das Knickscharnier 43 auf die andere Hälfte des festen mittleren Teils des PKW-Anhängers 36 angelegt. Nr. 42 zeigt den Stützfuss 42 des Hinterteils des PKW-Anhängers, welcher Stabilität der Konstruktion bei dem Falten in eine kompakte Einheit sichert. Nr. 37 schildert die Führung des Hilfsrades 39, welche eine sichere Bewegung des zusammengeklappten PKW-Anhängers zum Lagerungsplatz erlaubt. Nr. 40 zeigt das Rad, Nr. 33 den Koppelungshebel und Nr. 34 die Ankoppelung des Anhängers auf das Kraftfahrzeug.

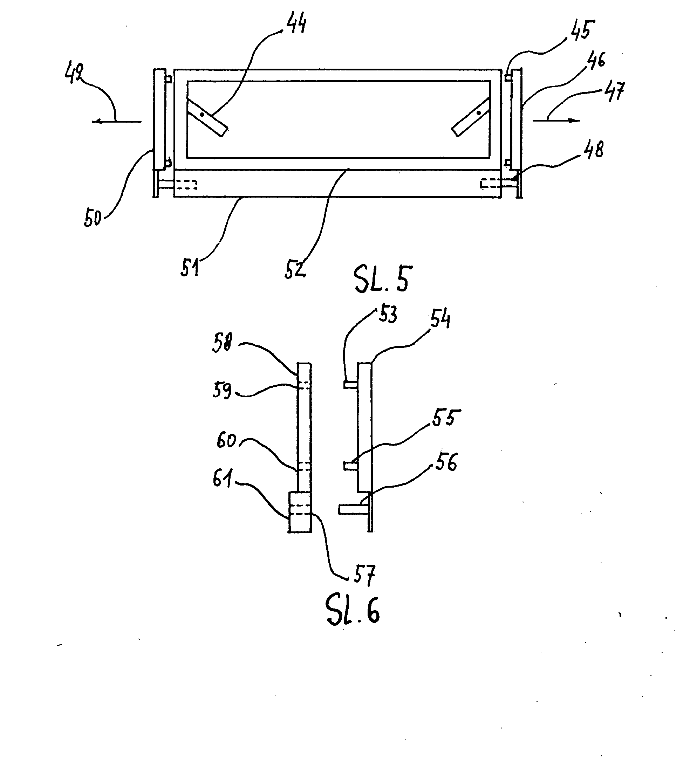

### Beschreibung von Bild 5;

Das Bild 5 zeigt die Hinterseite des Anhängerkastens, wo der Rahmen der auf das Fahrwerk 51 befestigte Hinterseite 52 dargestellt ist. Nr. 50 und 46 zeigen die beweglichen mittleren Teile der Längsseite, wo die Pfeilen 47 und 49 die Bewegung bzw. die Auslenkung der mittleren Teile der Länksseiten nach links und rechts zeigen. Die Bewegung ist über Bolzen 48 möglich, welche eine steife Verbindung des beweglichen Teils der Kastenseite 46 mit dem anderen Teil der Längsseite des Kastens erlauben. Nr. 44 zeigt den exzentrischen Verschluss des Hinterteils des Anhängerkastens.

### Beschreibung von Bild 6;

Bild 6 zeigt den Querschnitt der Längsseite des Kastens 58 und den Querschnitt des beweglichen mittleren Teils der Längssseite des Kastens 54, wo der Bolzen 56 und die Lagerung des Bolzens 57 dargestellt sind, eingebaut in das Fahrwerkprofil 61. Die Bolzen 53 und 55 erlauben eine steife Verbindung mit dem festen Teil der Längsseite 58 über Bolzenlagerungen 59, 60.

## Patentansprüche

1. Klappanhänger für PKW
**gekennzeichnet dadurch,**
**dass** das Fahrwerk (9,13) aus drei Teilen (27, 31,32) besteht, die mit beweglichen Scharnieren (28,30) verbunden sind.

2. Klappanhänger für PKW
**gekennzeichnet dadurch,**
**dass** der mittlere Teil (3,46,49) der Längsseite des Kastens nach links und rechts von dem mittleren Teil der Fahrwerkkonstruktion (32) über Bolzen (19,20,21,48,56) beweglich ist.

3. Klappanhänger für PKW
**gekennzeichnet dadurch,**
**dass** auf den Hinterteil der Fahrwerkkonstruktion (31,41) ein Stützfuss (42) befestigt ist.

4. Klappanhänger für PKW
**gekennzeichnet dadurch,**
**dass** auf dem Vorderteil der Fahrwerkkonstruktion (27,35,25) ein Hilfsrad (39) über die Führung (37) befestigt ist.

5. Klappanhänger für PKW nach Anspruch 2
**gekennzeichnet dadurch,**
**dass** der mittlere Teil (3) der Längsseite des Kastens (5) über Verschlüsse (2,4) von dem restlichen Bau der Längsseite des Kastens (5) abnehmbar ist.

6. Klappanhänger für PKW nach Anspruch 2
**gekennzeichnet dadurch,**
**dass** die gesamte Längsseite des Kastens (5) von dem Fahrwerk (9,12) abnehmbar ist.
